# EUROPÄISCHE PATENTSCHRIFT

(11) **EP 1 120 530 B1**
(45) Veröffentlichungstag und Bekanntmachung des Hinweises auf die Patenterteilung: **27.04.2005**
(21) Anmeldenummer: 01100613.7
(22) Anmeldetag: 11.01.2001
(51) Int. Cl.: E06B 3/984, F16B 25/00

(54) **Verbindung von aneinander anliegenden oder aneinander anstossenden Holzprofilen**
Assembly for abutting wooden frame members
Assemblage pour des profilés en bois jointifs

(30) Priorität: 25.01.2000 DE 20001249 U
(43) Veröffentlichungstag der Anmeldung: 01.08.2001
(73) Patentinhaber: SFS intec Holding AG, 9435 Heerbrugg (CH)
(72) Erfinder: Steffen, Markus, 9472 Grabs (CH); Sieber, Alex, 9434 Au (CH)
(74) Vertreter: Ludescher, Hans

(56) Entgegenhaltungen:
- EP-A- 0 267 153
- EP-A- 1 039 089
- AT-B- 391 168
- DE-U- 1 907 573

## Beschreibung

Die Erfindung betrifft eine Verbindung von aneinander anliegenden oder aneinander anstoßenden Holzprofilen mittels eines in beide Holzprofile eingreifenden Befestigungselementes, welches als mit einem Angriff für ein Drehwerkzeug ausgeführter Bolzen mit zwei mit Gewinde versehenen Abschnitten verschieden großen Durchmessers ausgebildet ist, wobei das Befestigungselement in dem einen Holzprofil quer zur Faserrichtung und in dem anderen Holzprofil parallel zur Faserrichtung verlaufend eingesetzt ist.

In vielen Ausführungsvarianten wurde schon versucht, mechanisch wirkende Holzverbindungen herzustellen, welche insbesondere bei Fenstern oder Fensterrahmen zu verschiedenen Lösungen führten. Bei der Verbindung von Holzprofilen ergeben sich vielfach Probleme, weil der natürliche Werkstoff Holz quer zur Faserrichtung relativ starken Dimensionsänderungen unterworfen ist. Zudem ist eine optimale Befestigung in Holz parallel zur Faserrichtung nach wie vor problematisch. Mit den bisherigen Methoden zur Verbindung von Holzprofilen ergeben sich fast immer schwundbedingte Spaltbildungen, was nicht nur zu ästhetischen Problemen, sondern auch zu Einbußen bei der Festigkeit einer solchen Verbindung führt. Eine Spaltwirkung führt insbesondere bei bewitterten Holzteilen zu einer Kapillarfuge, über die Wasser eindringen kann. Dadurch findet eine Anfeuchtung des Holzes statt. Selbst wenn eine Verschraubung unter Aufbringung eines großen Anzugsmomentes angewendet wird, kann eine schwundbedingte Spaltbildung nicht verhindert werden. Außerdem darf gerade bei Schrauben für den Holzbereich, insbesondere bei Einsatz parallel zur Faserrichtung, kein allzu großes Drehmoment aufgebracht werden, ansonsten die Schraube überdreht.

Es ist bereits eine Eck- oder Kämpferverbindung für zumindest teilweise aus Holzprofilen gebildete Fenster oder Türen bekannt (EP 1 039 089 A), bei welcher an den gegenseitigen Verbindungsbereichen der Holzprofile in Bohrungen Schrauben eingesetzt sind, welche in beiden Holzprofilen durch Gewindeabschnitte gegen axiales Verschieben gesichert sind. Hier wird eine Schraube eingesetzt, welche zwei Gewindeabschnitte unterschiedlichen Durchmessers aufweist. Der Schaftabschnitt der Schraube mit dem größeren Durchmesser, der bei bestimmungsgemäßem Einsatz in dem ersten Holzprofil liegt, ragt zumindest über einen kurzen Bereich in das zweite Holzprofil hinein, um dadurch eine gegenseitige zentrierte Ausrichtung der Holzprofile zu erreichen. Es bedarf aber dazu einer entsprechend großen Bohrung, welche auch in das zweite Holzprofil hineinragt.

Die vorliegende Erfindung hat sich daher zur Aufgabe gestellt, eine Verbindung der eingangs genannten Art zu schaffen, mit welcher sowohl Querkräfte als auch in Längsrichtung eines eingesetzten Befestigungselementes wirkende Kräfte optimal übertragen werden können, wobei trotzdem die schwundbedingte Spaltbildung ausgeschaltet oder zumindest wesentlich verringert werden kann.

Erfindungsgemäß gelingt dies dadurch, dass das Befestigungselement als schaftartig ausgeführter Bolzen mit einem durchgehenden Gewinde ausgebildet ist, dass der in das Holzprofil quer zur Faserrichtung hineinragende Endbereich des Befestigungselementes größeren Durchmessers nahe dem Übergangsbereich zwischen den beiden Holzprofilen mittels des ersten, mit einem Gewinde versehenen Abschnittes in die Wandung einer vorgefertigten Bohrung eingreift und der in das Holzprofil parallel zur Faserrichtung eingreifende Endbereich einen gegenüber dem ersten Abschnitt längeren, zweiten Abschnitt mit einem durchgehenden Gewinde aufweist.

Eine derartige Verbindung kann bei allen möglichen Holzkonstruktionen, wie Wänden oder Decken, Fenstern oder Türen, Fenster- oder Türrahmen, Möbeln, Regalen oder dergleichen eingesetzt werden. Selbst bei starken Belastungen auf die miteinander zu verbindenden Holzprofile, bei welchen es sich auch um Bretter handeln kann, können die erforderlichen Querkräfte problemlos aufgenommen werden. Außerdem ist eine gegenseitige feste und schwundausgleichende Verbindung der Holzprofile gewährleistet. Durch die erfindungsgemäße Verbindung ergibt sich, dass ein kurzer Abschnitt des Befestigungselementes in dem ersten Holzprofil quer zur Faserrichtung liegt und dort festgelegt ist und mit dem anderen Abschnitt zumindest annähernd in Faserrichtung in das zweite Holzprofil eingreift. Damit ist eine optimale Befestigung möglich, ohne dass es zusätzlicher Gegenhalterungen, wie Muttern oder dergleichen, bedarf. Die erforderlichen Festigkeitswerte können in optimaler Weise erzielt werden.

Durch die erfindungsgemäßen Maßnahmen ist praktisch eine optimale Befestigung möglichst nahe der 0-Faser, also am gegenseitigen Übergangsbereich zwischen den beiden Holzprofilen möglich. Es wird dadurch in besonderer Weise dem Schwundverhalten des Holzes entgegengewirkt.

Weiter wird vorgesehen, dass das Gewinde des ersten und zweiten Abschnittes auf der Schraube schmal und schneidenartig ausgeführt ist. Damit liegen die entsprechenden Teile des Befestigungselementes mit ihrem Kernbereich ähnlich einer Passung in den vorgesehenen Bohrungen, wobei lediglich die Gewindebereiche in die Bohrungswandung eingreifen. Es ist dadurch einerseits eine optimale Kraftübertragung möglich und andererseits wird gerade beim Eindrehen parallel zur Faserrichtung die Spaltgefahr herabgesetzt oder gänzlich unterbunden.

Gerade bei einem solchen Einsatz einer Schraube ist es vorteilhaft, eine relativ große Gewindesteigung vorzusehen. Es wird deshalb vorgeschlagen, dass die Steigung des Gewindes der Schraube annähernd dem Kerndurchmesser des Schaftes im Gewindebereich entspricht.

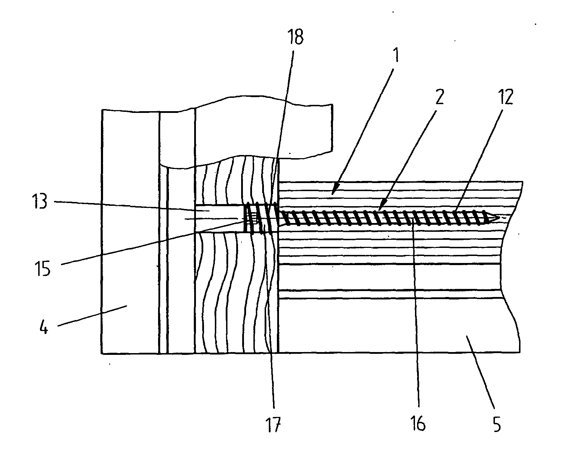

Weitere erfindungsgemäße Merkmale und besondere Vorteile werden in der nachstehenden Beschreibung anhand der Zeichnung noch näher erläutert. Die dargestellte Figur zeigt einen Schnitt durch die Verbindung zwischen zwei Holzprofilen, wobei ein spezielles Befestigungselement eingesetzt ist.

Zur Verbindung von aneinander anliegenden oder aneinander anstoßenden Holzprofilen 4 und 5 wird bzw. werden ein oder mehrere, in beide Holzprofile eingreifende(s) Befestigungselement(e) 1 vorgesehen. In dem einen Holzprofil 4 sind die Befestigungselemente 1 quer zur Faserrichtung verlaufend eingesetzt und in dem anderen Holzprofil 5 verläuft das Befestigungselement parallel zur Faserrichtung. Es ist dabei als wesentliche Maßnahme vorgesehen, den in das Holzprofil 4 quer zur Faserrichtung hineinragenden Endbereich des Befestigungselementes 1 nahe dem Übergangsbereich 6 zwischen den beiden Holzprofilen 4 und 5 eingreifen zu lassen, wobei dann dieser Endbereich mittels eines Gewindes in die Wandung der gegebenenfalls vorgefertigten Bohrung 13 eingreift. Der andere Endbereich des Befestigungselementes 1, welcher in das Holzprofil 5 parallel zur Faserrichtung eingreift, weist einen gegenüber dem anderen Abschnitt längeren Abschnitt mit einem Gewinde auf.

Das dargestellte Befestigungselement 1 besteht aus einer Schraube 2 und dient zur gegenseitigen Verbindung von stumpf oder in einem Gehrungsschnitt aneinander anliegenden oder aneinander anstoßenden Holzprofilen 4 und 5. In der Regel handelt es sich dabei um aus Holzprofilen gebildete Holzkonstruktionen, wie Wände oder Decken, Fenster oder Türen, Fenster- oder Türrahmen, Klappläden, Möbel, Regale usw. Durch die beschriebene Eck- oder Kämpferverbindung wird mittels des aus der Schraube 2 gebildeten Befestigungselementes 1 eine Befestigungsmöglichkeit geschaffen, welche praktisch überall dort optimal eingesetzt werden kann, wo zumindest teilweise aus Holz bestehende Profile zusammengefügt werden sollen. Ob es sich dabei schlussendlich um Holzprofile, Holzplatten, Holzbalken oder Holzbretter handelt, ist nicht von Bedeutung. Natürlich wird eine solche Befestigungsmöglichkeit je nach Anwendungsbereich dimensionsmäßig angepasst.

Bei der gezeigten Ausgestaltung ist ein Befestigungselement 1 nach Art einer Schraube 2 vorgesehen, wobei dieses Befestigungselement schaftartig ausgeführt ist, mit einem Angriff 15 für ein Drehwerkzeug versehen ist und aus einer Art Bolzen mit zwei Abschnitten 16 und 17 unterschiedlichen Durchmessers besteht. Der parallel zur Faserrichtung einzudrehende Abschnitt 16 ist mit einem Gewinde 12 versehen und im Durchmesser kleiner ausgeführt als der andere Abschnitt 17. Dieser andere Abschnitt 17, der also im Durchmesser größer ausgeführt ist, wird vorteilhaft ebenfalls mit einem Gewinde 18 ausgestattet, wobei dieses Gewinde 18 die gleiche oder eine geringfügig größere Steigung aufweist wie das Gewinde 12 des Abschnittes 16. Bei einer unterschiedlichen Steigung des Gewindes 12 und des Gewindes 18 kann ein zusätzliches Zusammenziehen der miteinander zu verbindenden Holzprofile 4, 5 erzielt werden.

Bei der gezeigten Schraube ist ein speziell ausgestaltetes Gewinde 12 vorgesehen. Dieses spezielle Gewinde 12 bzw. 18 ist schmal und schneidenartig ausgeführt, so dass es nur um ein geringes Maß in die Wandung der Bohrung eingreift. Für die Übertragung der Kräfte ist dies völlig ausreichend, wobei durch diese spezielle Ausgestaltung die Gefahr des Spaltens der Holzprofile 4 oder 5 praktisch ausgeschaltet werden kann. In diesem Zusammenhang ist auch eine besonders große Steigung des Gewindes 12 von Vorteil. Zweckmäßig entspricht diese Steigung annähernd dem Kerndurchmesser des Schaftes im Gewindebereich.

Bei Ausbildung einer Bohrung 13 besteht die Möglichkeit, diese mittels eines Pfropfens zu verschließen. Bei allen konstruktiven Varianten ist eine Befestigungsmöglichkeit geschaffen worden, mit welcher bei der Verbindung von Holzprofilen in optimaler Weise eine mechanische Befestigung in Form einer Schraube eingesetzt werden kann. Außerdem ist die Gewähr gegeben, dass die damit verbundenen Holzprofile später zu Recyclingzwecken problemlos wieder demontiert werden können.

## Patentansprüche

1. Verbindung von aneinander anliegenden oder aneinander anstoßenden Holzprofilen mittels eines in beide Holzprofile eingreifenden Befestigungselementes, welches als mit einem Angriff (15) für ein Drehwerkzeug ausgeführter Bolzen mit zwei mit Gewinde versehenen Abschnitten (16,17) verschieden großen Durchmessers ausgebildet ist, wobei das Befestigungselement (1) in dem einen Holzprofil quer zur Faserrichtung und in dem anderen Holzprofil parallel zur Faserrichtung verlaufend eingesetzt ist, **dadurch gekennzeichnet, daß** das Befestigungselement (1) als schaftartig ausgeführter Bolzen mit einem durchgehenden Gewinde (12,18) ausgebildet ist, daß der in das Holzprofil (4) quer zur Faserrichtung hineinragende Endbereich des Befestigungselementes (1) größeren Durchmessers nahe dem Übergangsbereich (6) zwischen den beiden Holzprofilen (4, 5) mittels des ersten, mit dem Gewinde (18) versehenen Abschnittes (17) in die Wandung einer vorgefertigten Bohrung (13) eingreift und der in das Holzprofil (5) parallel zur Faserrichtung eingreifende Endbereich einen gegenüber dem ersten Abschnitt (17) längeren, zweiten Abschnitt (16) mit dem durchgehenden Gewinde (12) aufweist.

2. Verbindung nach Anspruch 1, **dadurch gekennzeichnet, daß** das Gewinde (12, 18) des ersten und zweiten Abschnittes (16, 17) auf der Schraube (2) schmal und schneidenartig ausgeführt ist.

3. Verbindung nach Anspruch 2, **dadurch gekennzeichnet, daß** die Steigung des Gewindes (12) der Schraube (2) annähernd dem Kerndurchmesser des Schaftes im Gewindebereich entspricht.

4. Verbindung nach einem der Ansprüche 1-3, **dadurch gekennzeichnet, daß** das Gewinde (18) des Abschnittes (17) eine größere Steigung aufweist als das Gewinde (12) des Abschnittes (16) der Schraube (2).

## Claims

1. Connection of timber sections, which adjoin or abut one another, by means of a fastening element which engages in two timber sections and which is in the form of a stud provided with an engagement portion (15) for a rotary tool and with two threaded portions (16,17) of different diameters, wherein the fastening element (1) is inserted into one timber section extending across the grain and into the other timber section extending parallel to the grain, **characterised in that** the fastening element (1) is in the form of a shank-like stud with a continuous screw-thread (12,18), **in that** the end zone of the fastening element (1) projects into the timber section (4) across the grain and is of larger diameter and engages near the transition zone (6) between the two timber sections (4,5) by means of the first portion (17) provided with the screw-thread (18) into the wall of a premachined bore (13) and the end portion engaging into the timber section (5) parallel to the grain has a second portion (16) which is longer than the first portion (17) and which has the continuous screw-thread (12).

2. Connection according to Claim 1, **characterised in that** the screw-thread (12,18) of the first and second portions (16,17) on the screw (2) is designed to be narrow and of cutting-edge type.

3. Connection according to Claim 2, **characterised in that** the pitch of the screw-thread (12) of the screw (2) corresponds approximately to the core diameter of the shank in the threaded zone.

4. Connection according to any one of Claims 1 to 3, **characterised in that** the screw-thread (18) of the portion (17) has a larger pitch than the screw-thread (12) of the portion (16) of the screw (2).

## Revendications

1. Assemblage de profilés en bois jointifs au moyen d'un élément de fixation prenant dans les deux profilés en bois, et formé en tant qu'axe réalisé avec une prise (15) pour un outil rotatif, comportant deux segments munis d'un filetage (16, 17) de diamètre différemment grand, l'élément de fixation (1) étant introduit dans un profilé en bois perpendiculairement à la direction des fibres et dans l'autre profilé en bois parallèlement à la direction des fibres,
**caractérisé en ce que**
l'élément de fixation (1) est un axe en forme de tige ayant un filetage traversant (12, 18), la zone d'extrémité de plus grand diamètre de l'élément de fixation (1) s'enfonçant dans le profilé en bois (4) perpendiculairement à la direction des fibres, près de la zone de transition (6) entre les deux profilés en bois (4, 5), pénètre dans la paroi d'un perçage (13) préalable, au moyen du premier segment (17) muni du filetage (18) et la zone d'extrémité prenant dans le profilé en bois (5) parallèlement à la direction des fibres présente, par rapport au premier segment (17), un second segment (16) plus long ayant le filetage traversant (12).

2. Assemblage selon la revendication 1,
**caractérisé en ce que**
sur la vis (2) les filetages (12, 18) des premier et second segments (16,17) sont minces et du type à arête coupante (2).

3. Assemblage selon la revendication 2,
**caractérisé en ce que**
le pas du filetage (12) de la vis (2) est approximativement égal au diamètre du coeur de la tige dans la zone du filetage.

4. Assemblage selon l'une des revendications 1 à 3,
**caractérisé en ce que**
le filetage (18) du segment (17) présente un pas plus grand que le filetage (12) du segment (16) de la vis (2).
